# EUROPEAN PATENT APPLICATION

(11) **EP 2 950 257 A1**
(43) Date of publication of application: **02.12.2015**
(21) Application number: 15162675.1
(22) Date of filing: 07.04.2015
(51) Int. Cl.: G06Q 30/00, G09B 7/00

(54) **METHOD AND DEVICE FOR PROCESSING CHILD MODE FOR A HAND HELD DEVICE**

(30) Priority: 30.05.2014 CN 201410240563
(71) Applicant: Xiaomi Inc., Beijing 100085 (CN)
(72) Inventor: Shi, Dalong, 100085 Beijing (CN); Ma, Kun, 100085 Beijing (CN); Lin, Jinbin, 100085 Beijing (CN)
(74) Representative: Sackin, Robert

(57) **Abstract**

The disclosure relates to a method and a device for processing a child mode, belonging to the field of internet technology. The method includes: a terminal device receiving an allowed function list and a prohibited function list of a target application sent from a first terminal (101); determining allowed functions in the target application according to the allowed function list or the prohibited function list (102); and displaying the allowed functions under a child mode of the target application (103). By the disclosure, normal usage of applications is not affected under the child mode.

## Description

### TECHNICAL FIELD

The present disclosure generally relates to the field of internet technology and, more particularly, to a method and a device for processing a child mode.

### BACKGROUND

With the development of wireless communication technology, mobile phones are widespread increasingly. Many children have their own mobile phones, and use applications on the mobile phone to make friends, play games, browse WebPages and so on. However, there are variety of information on the internet, children are possible to be deceived or may obtain information that does not benefit for their physical and mental growth healthily when using applications since they are lack of information discrimination and self-control ability. Thus, it is needed to control the children's usage of applications.

Currently, children's usage of applications may be controlled as follows in detail: a child mode or a kid mode is provided, parent turns on the kid mode by entering the password, once the kid mode is turned on, corresponding applications are disabled, and then only when a correct password is entered, the kid mode can be turned off and corresponding applications can be started up.

During the process of realizing the disclosure, the inventor found at least the following problems existing in the related technology: under the child mode, disabling the startup of corresponding applications may prevent kids from contacting information that should not be contacted by them, however, the corresponding applications cannot be used normally at the moment.

### SUMMARY

In order to solve the problem in the related technology, embodiments of the disclosure provide a method and a device for processing a child mode, which may allow normal usage of applications not to be affected under the child mode. The disclosure includes technical solutions as follows.

In an aspect, a method for processing a child mode is provided, the method including:
receiving an allowed function list or a prohibited function list of a target application sent from a first terminal;
determining allowed functions in the target application according to the allowed function list or the prohibited function list; and
displaying the allowed functions under a child mode of the target application.

Optionally, the method further includes:
when detecting that to-be-displayed content in the target application includes a predetermined first character, shielding the first character in the to-be-displayed content.

Optionally, the method further includes:
when detecting that to-be-displayed content in the target application includes a predetermined first character, sending the to-be-displayed content to the first terminal.

Optionally, the method further includes:
when detecting that an operation executed by the target application meets a predetermined reporting condition, sending the operation's content to the first terminal.

Optionally, the step of when detecting that the operation executed by the target application meets the predetermined reporting condition, sending the operation's content to the first terminal includes:
when detecting that the target application executes a predetermined first function, sending an executing content of the first function to the first terminal.

Optionally, the method further includes:
receiving an allowed communication account list or a prohibited communication account list sent from the first terminal;
determining allowed communication accounts according to the allowed communication account list or the prohibited communication account list; and
prohibiting communications between a local account and accounts other than the allowed communication accounts.

Optionally, the method further includes:
when receiving an adding contact command, obtaining attribute information of a target account corresponding to the adding contact command;
if the attribute information of the target account meets a predetermined adding condition, adding the target account as a contact; if the attribute information of the target account does not meet the predetermined adding condition, rejecting the adding contact command.

Optionally, the method further includes:
when receiving an adding contact command, obtaining an account identification of a target account corresponding to the adding contact command, and sending an adding contact request with the account identification to the first terminal;
when receiving allowed information sent from the first terminal, adding the target account as a contact; or when receiving reject information sent from the first terminal, rejecting the adding contact command.

Optionally, the method further includes:
displaying other functions than the allowed functions of the target application;
when receiving an executing command of a second function in the other functions, sending a function executing request with identification information of the second function to the first terminal;
when receiving allowed information sent from the first terminal, executing the second function, or when receiving reject information sent from the first terminal, rejecting the executing command.

Optionally, the method further includes:
when a predetermined trigger event happens, sending local position information or movement route information to the first terminal.

In another aspect, a device for processing a kid mode is provided, the device including:
a receiving module configured for receiving an allowed function list or a prohibited function list of a target application sent from a first terminal;
a determining module configured for determining allowed functions in the target application according to the allowed function list or the prohibited function list; and
a display module configured for displaying the allowed functions under a kid mode of the target application.

Optionally, the display module is further configured for:
when detecting that to-be-displayed content in the target application includes a predetermined first character, shielding the first character in the to-be-displayed content.

Optionally, a sending module is further included, which is configured for:
when detecting that the to-be-displayed content in the target application includes a predetermined first character, sending the to-be-displayed content to the first terminal.

Optionally, a sending module is further included, which is configured for:
when detecting that an operation executed by the target application meets a predetermined reporting condition, sending the operation's content to the first terminal.

Optionally, the sending module is configured for:
when detecting that the target application executes a predetermined first function, sending an executing content of the first function to the first terminal.

Optionally, a prohibiting module is further included, which is configured for:
receiving an allowed communication account list or a prohibited communication account list sent from the first terminal;
determining allowed communication accounts according to the allowed communication account list or the prohibited communication account list;
prohibiting communications between a local account and accounts other than the allowed communication accounts.

Optionally, an adding module is further included, which is configured for:
when receiving an adding contact command, obtaining attribute information of a target account corresponding to the adding contact command;
if the attribute information of the target account meets a predetermined adding condition, adding the target account as a contact, if the attribute information of the target account does not meet the predetermined adding condition, rejecting the adding contact command.

Optionally, an adding module is further included, which is configured for:
when receiving an adding contact command, obtaining an account identification of a target account corresponding to the adding contact command, and sending an adding contact request with the account identification to the first terminal;
when receiving allowed information sent from the first terminal, adding the target account as a contact, or when receiving reject information sent from the first terminal, rejecting the adding contact command.

Optionally, an executing module is further included, which is configured for:
displaying other functions than the allowed functions in the target application;
when receiving an executing command of a second function in the other functions, sending a function executing request with identification information of the second function to the first terminal;
when receiving allowed information sent from the first terminal, executing the second function; or when receiving reject information sent from the first terminal, rejecting the executing command.

Optionally, a sending module is further included, which is configured for:
when a predetermined trigger event happens, sending local position information or movement route information to the first terminal.

In still another aspect, a device for processing a child mode is provided, the device including:
a processor, a display; and
a memory for storing instructions executable by the processor;
wherein, using instructions stored in the memory, the processor is configured to:
receive an allowed function list or a prohibited function list of a target application sent from a first terminal;
determine allowed functions in the target application according to the allowed function list or the prohibited function list; and
cause the display to display the allowed functions under a child mode of the target application.

In further another aspect, there is provided a computer program which, when being executed on a processor of a device, performs any one of the above methods.

Some beneficial effects of the disclosure may include:
in the embodiment of the disclosure, receiving allowed function list or prohibited function list of the target application sent from the first terminal, determining the allowed functions in the target application according to the allowed function list or the prohibited function list, and displaying the allowed functions under the kid mode of the target application; by the above processing manner, normal usage of the application is not affected under kid mode.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention, but not used to limit the disclosure. In the drawings:
Fig. 1 is a flow chart of a method for processing a child mode according to an exemplary embodiment.
Fig. 2a is a schematic diagram of a display content shown on a terminal interface according to an exemplary embodiment.
Fig. 2b is a schematic diagram of a display content shown on a terminal interface according to an exemplary embodiment.
Fig. 2c is a schematic diagram of a display content shown on a terminal interface according to an exemplary embodiment.
Fig. 2d is a schematic diagram of a display content shown on a terminal interface according to an exemplary embodiment.
Fig. 2e is a schematic diagram of a display content shown on a terminal interface according to an exemplary embodiment.
Fig. 2f is a schematic diagram of a display content shown on a terminal interface according to an exemplary embodiment.
Fig. 2g is a schematic diagram of a display content shown on a terminal interface according to an exemplary embodiment.
Fig. 2h is a schematic diagram of a display content shown on a terminal interface according to an exemplary embodiment.
Fig. 2i is a schematic diagram of a display content shown on a terminal interface according to an exemplary embodiment.
Fig. 3 is a schematic diagram of the structure of a device for processing the child mode according to an exemplary embodiment.
Fig. 4 is a schematic diagram of the structure of the terminal according to an exemplary embodiment.

Illustrated embodiments of the present disclosure are shown by the above figures, and more detailed illustration will be described hereinafter. The figures and descriptive text are not intended to limit the scope of the disclosed concept in any manner, but to explain concepts of the disclosure to those skilled in the art with reference to specific embodiments.

### DETAILED DESCRIPTION

Detailed description of the present disclosure will further be made with reference to embodiments and drawings in order to make the objects, technical solutions and advantages of the present disclosure more apparent. The exemplary embodiments of the disclosure and illustrations thereof serve to explain but not to limit the disclosure.

The embodiments of the disclosure provide a method and a device for processing a child mode, which are illustrated in detail hereinafter with reference to accompanying drawings.

### First Embodiment

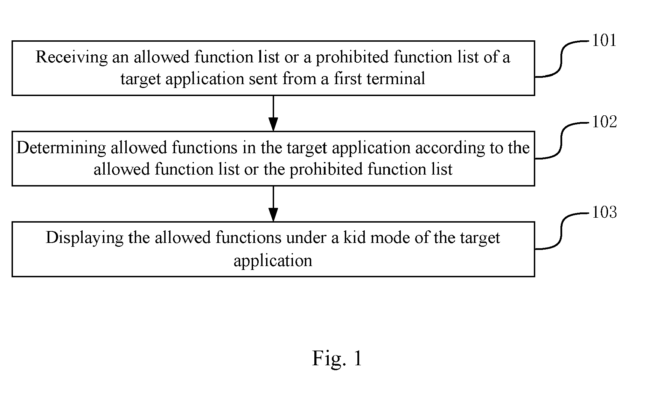

An embodiment of the disclosure provides a method for processing a child mode or a kid mode, as shown in Fig. 1, the processing flow of the method includes the following steps.

In step 101, an allowed function list or a prohibited function list of a target application sent from a first terminal is received.

In step 102, allowed functions in the target application are determined according to the allowed function list or the prohibited function list.

In step 103, the allowed functions are displayed under a kid mode of the target application.

In the embodiment of the disclosure, receiving the allowed function list or the prohibited function list of the target application sent from the first terminal, determining the allowed functions of the target application according to the allowed function list or the prohibited function list, displaying the allowed functions under the kid mode of the target application, by the processing manner above, normal usage of the application is not affected under kid mode.

### Second Embodiment

An embodiment of the disclosure provides a method for processing a kid mode. The executing body of the method may be a terminal device (which may be called a second terminal), such as a mobile phone, a tablet computer and other portable terminals. The second terminal may be a kid-used terminal, and the below-mentioned first terminal may be a parent-used terminal. In the embodiment, a mobile phone is taken as an example of the executive body to illustrate the technical solutions in detail. Other executive bodies are similar as the mobile phone, which are not illustrated hereinafter for concise purpose.

The processing flow shown in Fig. 1 is illustrated hereinafter in detail with embodiments, the content of which may be as follows.

In step 101, an allowed function list or a prohibited function list of a target application sent from a first terminal is received. The method in the embodiment may be used in the second terminal.

The target application may be various applications installed in the second terminal, such as instant communication software, webpage browse software, video software and so on. The allowed function list may be a list recording the allowed functions of the target application and including at least one allowed function. The prohibited function list may be a list recording the prohibited functions of the target application, including at least one prohibited function.

In practical usage, both the first terminal and the second terminal have the target application. The target application may provide a parent control function. In the first terminal, a user (i.e., the parent) turns on the parent control function, then the first terminal may display the function list of the target application, and the function list may include all functions of the target application, such as instant communication function, adding contact function, joining group function and so on. The parent may select allowed functions in the function list to form an allowed function list and send the allowed function list to the second terminal, or may select prohibited functions in the function list to form a prohibited function list and send the prohibited function list to the second terminal.

For example, the function list provided by a system includes an instant communication function, adding contact function and joining group function, etc. The user of the first terminal selects the instant communication function and the adding contact function from the function list as the allowed functions. The instant communication function and the adding contact function form the allowed function list which is sent to the second terminal.

In step 102, the allowed functions of the target application are determined according to the allowed function list or the prohibited function list. The method of the embodiment may be used in wireless terminal devices.

In the embodiment, for the allowed function list, the second terminal may obtain the functions in the allowed function list and take them as the allowed functions. The functions which are not listed in the allowed function list are taken as prohibited functions. For the prohibited function list, the second terminal may obtain the functions which are not listed in the prohibited function list from all functions of the target application, and take them as the allowed functions.

In step 103, under a kid mode of the target application, the allowed functions are displayed. The method in the embodiment may be used in wireless terminal devices.

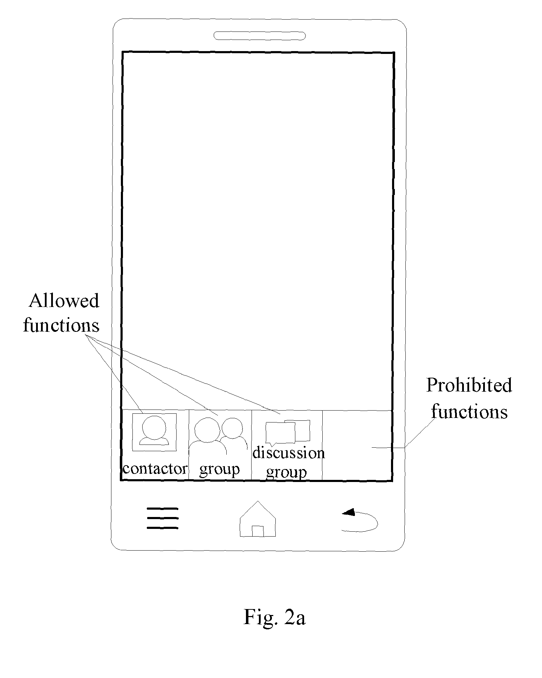

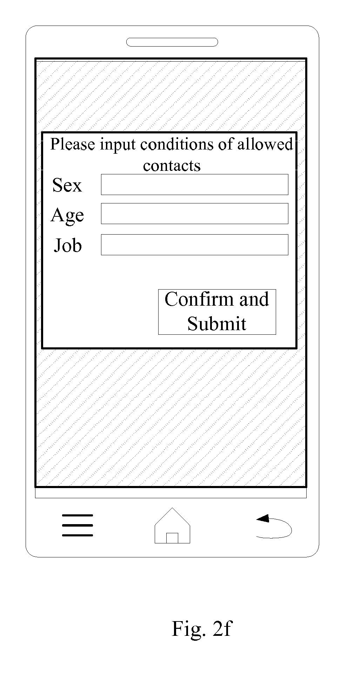

In practical usage, the target application may be provided with a key for turning on the kid mode, the user (i.e., the parent) may click the key to turn on the kid mode and set a mode off password. After the kid mode is turned on, executive keys of the allowed functions may be displayed in the target application, as shown in Fig. 2a. At that moment, executive keys corresponding to other functions may not be displayed. However, executive keys corresponding to the other functions may also be displayed based on different settings of the parent.

Optionally, in the embodiment of the disclosure, it is also possible to shield some characters in the information displayed in the second terminal. The corresponding processing may be: when detecting that the to-be-displayed content in the target application includes a predetermined first character, shielding the first character in the to-be-displayed content. The method in the embodiment may be used in the wireless terminal devices.

The first character may be sensitive words or words unfit for kids' reading.

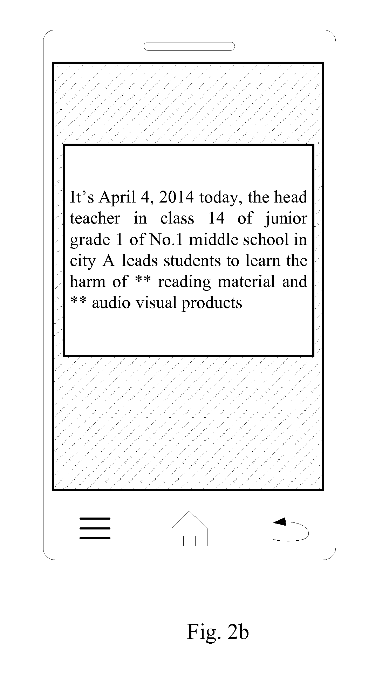

In practical usage, the target application provides a first character configuration interface, the parent inputs characters which need to be shielded to kids (that is, the first character) in the interface, a first character list is formed by the input characters and is sent to the second terminal. The second terminal stores the first characters in the list. When the second terminal detects that the to-be-displayed content includes a predetermined first character, it may process the first character in the to-be-displayed content with a special displaying effect, for example, the first character is replaced by "*", and then displayed on the second terminal, as shown in Fig. 2b.

Optionally, in the embodiment of the disclosure, the kid's parent may be informed of some characters displayed on the second terminal. The corresponding processing may be: when detecting that the to-be-displayed content in the target application includes a predetermined first character, the to-be-displayed content is sent to the first terminal. The method in the embodiment may be used in the wireless terminal devices.

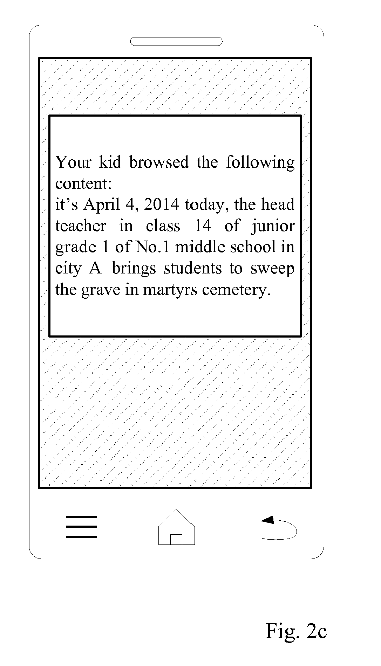

In practical usage, the target application provides a first character configuration interface, the parent inputs characters which need to be shielded to kids, and a first character list is formed by the input characters and sent to the second terminal, the second terminal stores the first characters in the list. When the to-be-displayed content in the second terminal includes the first characters in the first character list, the second terminal sends the to-be-displayed content to the first terminal, in which case, the second terminal may send the displayed whole page to the first terminal, or the second terminal may send the whole paragraph or sentence in which the corresponding character is located to the first terminal, as shown in Fig. 2c.

Optionally, in the embodiment of the disclosure, it is also possible to report kid's specific operations on the application. The corresponding processing may be: when detecting that the an operation executed by the target application meets a predetermined reporting condition, sending the operation's content to the first terminal. The method in the embodiment may be used in the wireless terminal devices.

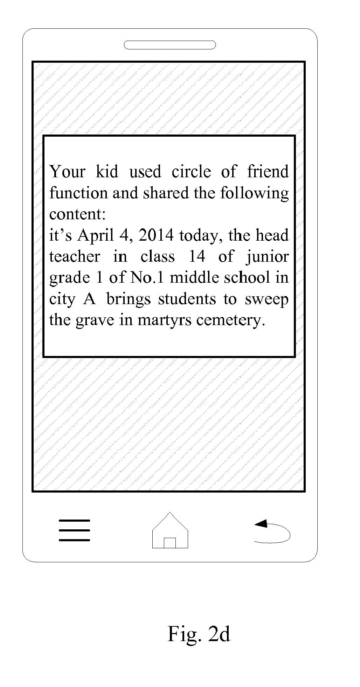

In practical usage, the reporting condition may be set by parent in the first terminal and informed to the second terminal to record. The corresponding reporting condition may be various, such as communicating with a specified account, or executing an adding contact operation, and so on. When the operation executed by the application in the second terminal meets the predetermined reporting condition, the second terminal sends the operation's content to the first terminal, as shown in Fig. 2d. For example, the second terminal sends the message content of an instant communication to the first terminal, or sends the shared content in circle of friends to the first terminal.

For example, the reporting condition is communicating with a specified account. When the login account (that is the kid's account) of the second terminal communicates with the specified account, the second terminal sends the corresponding communicating content to the first terminal.

Optionally, the predetermined reporting condition may be executing a specified predetermined function in the application. The corresponding processing may be: when detecting that the target application executes a predetermined first function, the executing content of the first function is sent to the first terminal.

In practical usage, the first function may be set in the first terminal by parent and is informed to the second terminal, the second terminal stores the first function, and when the second terminal detects that the target application executes the first function, it sends the executing content of the first function to the first terminal. For example, the first function may be communicating function, the corresponding executing content may be the content of communicating, or the first function may be adding contact function, and the corresponding executing content may be the account information of a target account which is added as a contact.

Optionally, in the embodiment of the disclosure, it is also possible to restrict the contact of the kid's communication, the corresponding processing may be as follows:

Step one, receiving an allowed communication account list or a prohibited communication account list sent from the first terminal. The method of the embodiment may be used in a wireless terminal device.

In practical usage, the page of parent control function may further include a key of communication account setting function. The parent clicks the key and may trigger the first terminal to obtain the contact list of the login account (that is the kid's account) of the second terminal from the server, the contact list records the friends' accounts of the kid, the parent may select allowed communication accounts in the contact list to form the allowed communication account list which is sent to the second terminal. Or, the parent may also select prohibited communication accounts in the contact list to form the prohibited communication account list which is sent to the second terminal.

Step two, determining the allowed communication accounts according to the allowed communication account list or the prohibited communication account list.

In practical usage, the second terminal obtains the accounts in the allowed communication account list from the first terminal and takes them as allowed communication accounts, and the accounts which are not listed in the allowed communication account list are taken as prohibited communication accounts; or, the second terminal obtains the accounts in the prohibited communication account list, and the accounts which are not listed in the prohibited communication account list are taken as the allowed communication accounts.

Step three, prohibiting the local account to communicate with accounts other than the allowed communication accounts.

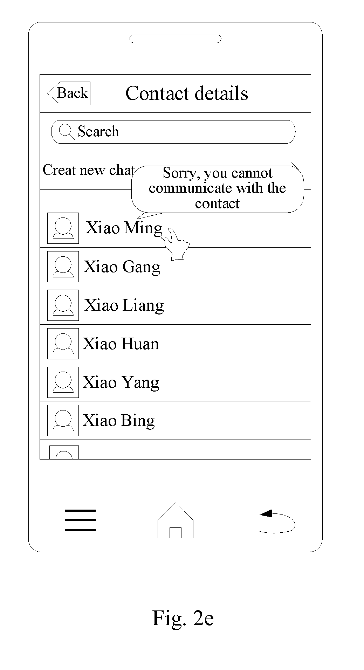

In practical usage, in the contact list of the second terminal, it may be set to only display the allowed communication accounts, or it may also be set to only being capable of communicating with the allowed communication accounts. When the user of the second terminal communicates with the accounts other than the allowed communication accounts, the target application may popup a message window to prompt that the communication cannot be processed, as shown in Fig. 2e.

Optionally, in the embodiment of the disclosure, it is also possible to set several restrict conditions to kid in adding friends, the corresponding processing may be as follows:

Step one, when receiving an adding contact command, obtaining attribute information of the target account corresponding to the adding contact command. The method of the embodiment may be used in wireless terminal devices.

The target account corresponding to the adding contact command is an account that the kid intends to add as a contact. The attribution information may be age, school, sex, job or other information of the target account.

Step two, if the attribution information of the target account meets the predetermined adding condition, adding the target account as a contact; if the attribution information of the target account does not meet the predetermined adding condition, rejecting the adding contact command. The method of the embodiment may be used in the second terminal.

In practical usage, the parent may set adding conditions in the first terminal, as shown in Fig, 2f, and the conditions may be informed to the second terminal to store. For example, the adding condition may be the target account being in the same school as the kid, the age being in a certain range and so on. The adding condition may be set as invisible to the kid. When other user requests to add the kid's account as a contact and the kid agrees, or the kid on his or her own adds the account of other user as a contact, the second terminal may receive the adding contact command input by the kid, if the attribution information of the target account to be added meets the adding condition, the target account is added as a contact; if the attribution information of the target account does not meet the adding condition, the target account is rejected to be added as a contact.

Optionally, in the embodiment of the disclosure, the parent may examine and approve when the kid adds friends, the corresponding processing may be as follows:

Step one, when receiving the adding contact command, obtaining the account identification of the target account corresponding to the adding contact command, and sending an adding contact request with the account identification to the first terminal. The method of the embodiment may be used in wireless terminal devices.

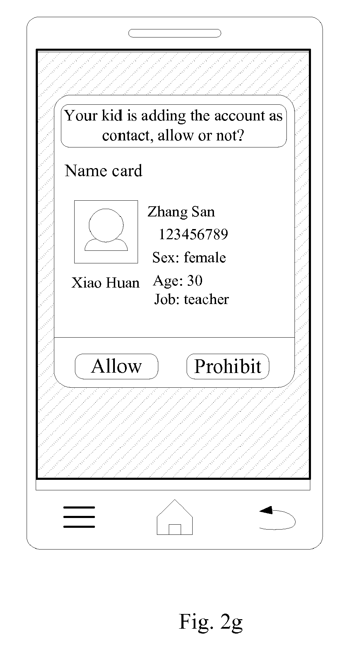

In practical usage, when the other account requests to add the kid's account as a contact and the kid agrees, or the kid on his or her own adds the other account as a contact, the second terminal may receive the adding contact command input by the kid, at that moment the second terminal may obtain the account identification of the target account corresponding to the adding contact command, and send the adding contact request with the account identification to the first terminal; the request may carry with the account information of the target account, such as sex, age, school and so on, as shown in Fig. 2g.

Step two, adding the target account as a contact when receiving the allowed information sent from the first terminal; or rejecting the adding contact command when receiving the rejected information sent from the first terminal.

In practical usage, when the first terminal receives an adding contact request with account identification, it may display an adding contact request window which may display the account identification of the target account as well as the corresponding account information, and which may also display an allowed adding key and a prohibited adding key. If the parent allows, he or she may click the allowed adding key, trigger the first terminal to generate allowed information and send to the second terminal; or, if the parent rejects, he or she may click the prohibited adding key to trigger the first terminal to generate reject information and send to the second terminal.

Optionally, in the embodiment of the disclosure, besides showing the allowed functions, it is also possible to display other functions than these functions, and the parent may examine and approve the usage of the kid to the other functions. The corresponding processing may be as follows:

Step one, displaying other functions than the allowed functions in the target application. The method in the embodiment may be used in wireless terminal devices.

In practical usage, after determining the allowed functions in the target application by step 102, other functions than the allowed functions in the target application may be further determined, and then the other functions are also displayed. During displaying, the executive keys corresponding to the other functions and the executive keys corresponding to the allowed functions may be displayed at different display areas respectively, or the executive keys corresponding to the other functions and the executive keys corresponding to the allowed functions may be displayed at their original positions.

Step two, when receiving the executing command of the second function in the other functions, sending a function executing request with identification information of the second function to the first terminal.

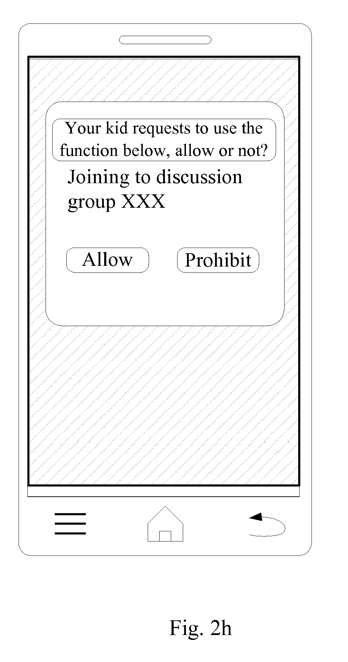

In practical usage, when the first terminal receives a function executing request of the second function sent from the second terminal, the first terminal may display a function executing request window, the window may display identification information of the target function, and may display an allowed key and a prohibited key, as shown in Fig. 2h. If the parent permits, he or she may click the allowed key, trigger the first terminal to generate allowed information and send to the second terminal; or if the parent rejects, he or she may click the prohibited key to trigger the first terminal to generate reject information and send to the second terminal.

Step three, when receiving the allowed information sent from the first terminal, executing the second function; or when receiving the reject information sent from the first terminal, rejecting the executing command.

Optionally, in the embodiment of the disclosure, the kid's terminal may also report the position, route and other information to the parent's terminal. The corresponding processing may be: when a predetermined trigger event happens, sending the local position information or movement route information to the first terminal. The method in the embodiment may be used in wireless terminal devices.

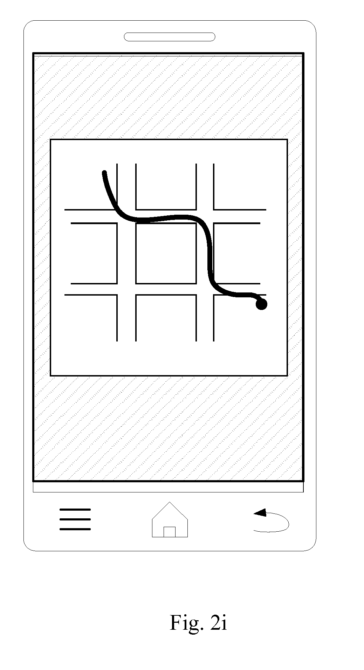

In practical usage, the trigger event may be set by parent in the first terminal, and may be informed to the second terminal to record, or may be preset in the application. The corresponding trigger event may be reaching predetermined time period, or reaching predetermined timing and so on. When the predetermined trigger event happens, the second terminal may obtain the current position information and send it to the first terminal, or may obtain movement route information for a recent period of time and send it to the first terminal. The first terminal receives the position information or movement route information, and then displays the corresponding position or movement route on a map, as shown in Fig. 2i.

In the embodiment of the disclosure, receiving the allowed function list or prohibited function list of the target application sent from the first terminal, determining the allowed functions in the target application according to the allowed function list or the prohibited function list, displaying the allowed functions under the kid mode of the target application, by the processing manner above, normal usage of applications are not affected under kid mode.

### Third Embodiment

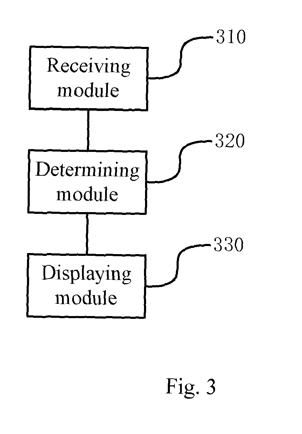

Based on the same technical conception, the embodiment of the disclosure further provides a device for processing a kid mode, as shown in Fig. 3, the device including:
a receiving module 310 configured for receiving an allowed function list or a prohibited function list of a target application sent from a first terminal;
a determining module 320 configured for determining allowed functions in the target application according to the allowed function list or the prohibited function list; and
a display module 330 configured for displaying the allowed functions under a kid mode of the target application.

Optionally, the display module 330 is further configured for:
when detecting that to-be-displayed content in the target application includes a predetermined first character, shielding the first character in the to-be-displayed content.

Optionally, a sending module is further included, configured for:
when detecting that the to-be-displayed content in the target application includes a predetermined first character, sending the to-be-displayed content to the first terminal.

Optionally, a sending module is further included, configured for:
when detecting that an operation executed by the target application meets a predetermined reporting condition, sending the operation's content to the first terminal.

Optionally, the sending module is configured for:
when detecting that the target application executes a predetermined first function, sending the executing content of the first function to the first terminal.

Optionally, a prohibiting module is further included, configured for:
receiving the allowed communication account list or the prohibited communication account list sent from the first terminal;
determining the allowed communication accounts according to the allowed communication account list or the prohibited communication account list; and
prohibiting communications between a local account and accounts other than the allowed communication accounts.

Optionally, an adding module is further included, configured for:
when receiving an adding contact command, obtaining the attribute information of the target account corresponding to the adding contact command;
if the attribute information of the target account meets the predetermined adding condition, adding the target account as a contact; if the attribute information of the target account does not meet the predetermined adding condition, rejecting the adding contact command.

Optionally, an adding module is further included, configured for:
when receiving an adding contact command, obtaining an account identification of the target account corresponding to the adding contact command, and sending an adding contact request with the account identification to the first terminal;
when receiving allowed information sent from the first terminal, adding the target account as a contact, or when receiving reject information sent from the first terminal, rejecting the adding contact command.

Optionally, an executing module is further included, configured for:
displaying other functions than the allowed functions in the target application;
when receiving an executing command of the second function in the other functions, sending a function executing request with the identification information of the second function to the first terminal;
when receiving the allowed information sent from the first terminal, executing the second function; or when receiving the reject information sent from the first terminal, rejecting the executing command.

Optionally, a sending module is further included, configured for:
when a predetermined trigger event happens, sending the local position information or movement route information to the first terminal.

In the embodiment of the disclosure, receiving the allowed function list or the prohibited function list of the target application sent from the first terminal, determining the allowed functions in the target application according to the allowed function list or the prohibited function list, displaying the allowed functions under the kid mode of the target application, by the processing manner above, normal usage of the applications is not affected under kid mode.

### Fourth Embodiment

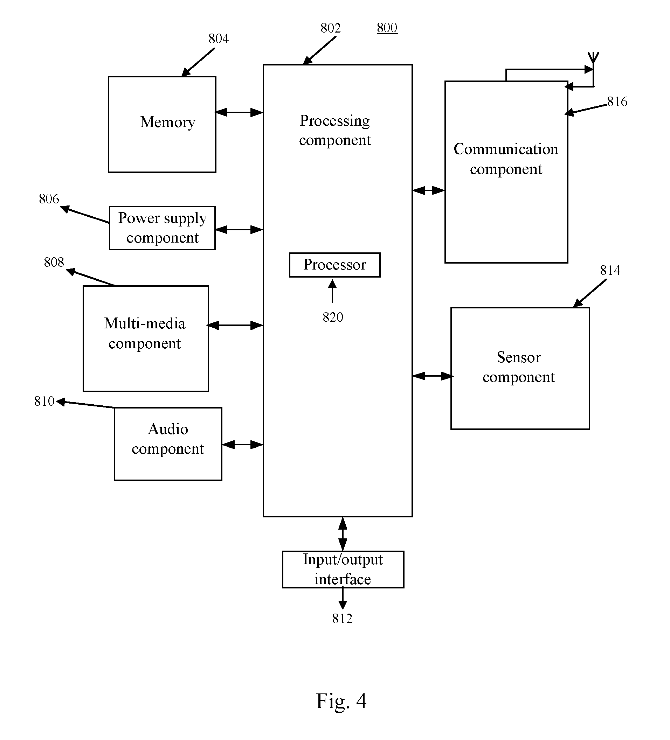

Fig. 4 is a block diagram of a terminal 800 for processing a kid mode according to an exemplary embodiment. For example, the terminal 800 may be a mobile phone, a computer, a digital broadcast terminal, a message sending and receiving device, a game control center, a flat computer device, a medical device, a fitness device, a personal digital assistant and so on.

As shown in Fig. 4, the terminal 800 may include one or more the following components: a processing component 802, a memory 804, a power supply component 806, a multi-media component 808, an audio component 810, an input/output (I/O) interface 812, a sensor component 814 and a communication component 816.

The processing component 802 usually controls the whole operation of the terminal 800 such as operations relating to display, making call, digital communication, taking photos and recording. The processing component 802 may include one or more processors 820 to execute command to finish all or part steps of the above method. Besides, the processing component 802 may include one or more modules for facilitating the interaction between the processing component 802 and other components. For example, the processing component 802 may include a multi-media module to facilitate the interaction between the multi-media component 808 and the processing component 802.

The memory 804 is configured for storing various kinds of data to support the operation at the terminal 800. The examples of the data may include any commands for performing applications or methods at the terminal 800, contact data, phone book data, messages, figures, videos and so on. The memory 804 may be any types of volatile or non-volatile storage devices or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or compact disk.

The power supply component 806 provides power for components of the terminal 800. The power supply component 806 may include power management system, one or more power supplies and other related components for generating, managing and distributing power for the terminal 800.

The multi-media component 808 includes a screen which provides an output interface between the terminal 800 and the user. In some embodiments, the screen may include a liquid crystal display (LCD) and a touch panel (TP). If the screen includes a touch panel, the screen may be realized to be a touch screen to receive input signals from the user. The touch panel includes one or more touch sensors to sense touch, slide and gestures on the touch panel. The touch sensor may not only sense the touch or slide boundary, but also detect the duration time and pressure of the touch and slide operation. In some embodiments, the multi-media component 808 includes a front camera and/or a back camera. When the terminal 800 is in an operation mode, such as photo mode or a video mode, the front camera and/or the back camera may receive external multi-media data. Each front camera and back camera may be a fixed optical lens system or have the focal length and optical zoom ability.

The audio component 810 is configured for outputting and/or inputting audio signals. For example, the audio component 810 includes a microphone (MIC); when the terminal 800 is in an operation mode such as calling mode, a record mode and a voice recognition mode, the microphone is configured for receiving external audio signals. The received audio signal may be further stored in a memory 804 or sent by a communication component 816. In some embodiments, the audio component 810 may further include a loudspeaker for outputting audio signals.

The I/O interface 812 may provide interface between the processing component 802 and peripheral interface modules. The peripheral interface modules may be a keyboard, a click wheel, a button and so on. These buttons include but not limited to a homepage button, a volume button, a start button and a lock button.

The sensor component 814 includes one or more sensors for evaluating states of different aspects of the terminal 800. For example, the sensor component 814 may detect the on/off state of the terminal 800, the relative locations of components, for example, the components are display and keypad of the terminal 800. The sensor component 814 may further sense the position change of component of the terminal 800 or the position change of the terminal 800, whether the touch exists between the user and the terminal 800, the direction of the terminal 800, the acceleration/deceleration of the terminal 800 and the temperature change of the terminal 800. The sensor component 814 may include a proximity sensor which is configured for detecting the existence of nearby substance when no physical contact exists. The sensor component 814 may further include a light sensor such as CMOS or CCD image sensor, for using in imaging applications. In some embodiments, the sensor component 814 further includes an accelerate sensor, a gyro sensor, a magnetic sensor, a pressure sensor or a temperature sensor.

The communication component 816 is configured for communicating between the terminal 800 and other devices in wired or wireless manner. The terminal 800 may be connected to wireless network based on communication standard such as wireless fidelity (WiFi), 2G or 3G or their combinations. In an exemplary embodiment, the communication component 816 receives broadcast signal or broadcast related information from outside broadcast management system via broadcast channel. In an exemplary embodiment, the communication component 816 further includes a near field communication (NFC) module to prompt short range communication. For example, the NFC module may be achieved based on radio frequency identification (RFID) technology, infrared data association (IrDA) technology, ultra-wide bandwidth (UWB) technology, Bluetooth (BT) technology and other technologies.

In exemplary embodiments, the terminal 800 may be achieved by one or more of application specific integrated circuit (ASIC), digital signal processor (DSP), digital signal processor device (DSPD), programmable logic device (PLD), field programmable gate array (FPGA), controller, micro controller, micro processor or other electronic elements for executing the method above.

In exemplary embodiments, a non-temporary computer readable storage medium with command is provided, such as memory 804 with command, the command may be executed by the processor 820 of the terminal 800 to finish the method above. For example, the non-temporary computer readable storage medium may be ROM, random access memory (RAM), CD-ROM, magnetic tape, soft disk and optical data storage devices, etc.

A non-temporary computer readable storage medium is provided, when instructions stored in the storage medium are executed by a processor of a mobile terminal, the mobile terminal may be caused to execute a method for obtaining cross domain data, the method includes the steps of:
receiving the allowed function list or the prohibited function list of the target application sent from the first terminal;
determining the allowed functions of the target application according to the allowed function list or the prohibited function list;
displaying the allowed functions under the kid mode of the target application.

Optionally, the method further includes:
when detecting that the to-be-displayed content in the target application includes a predetermined first character, shielding the first character in the to-be-displayed content.

Optionally, the method further includes:
when detecting that the to-be-displayed content in the target application includes a predetermined first character, sending the to-be-displayed content to the first terminal.

Optionally, the method further includes:
when detecting that the operation executed by the target application meets a predetermined reporting condition, sending the operation content to the first terminal.

Optionally, when detecting that the operation executed by the target application meets the predetermined reporting condition, sending the operation content to the first terminal, including:
when detecting that the target application executes a predetermined first function, sending the executing content of the first function to the first terminal.

Optionally, the method further includes:
receiving the allowed communication account list or the prohibited communication account list sent from the first terminal;
determining the allowed communication accounts according to the allowed communication account list or the prohibited communication account list;
prohibiting communications between a local account and accounts other than the allowed communication accounts.

Optionally, the method further includes:
when receiving the adding contact command, obtaining the attribute information of the target account corresponding to the adding contact command;
if the attribute information of the target account meets the predetermined adding condition, adding the target account as a contact, if the attribute information of the target account does not meet the predetermined adding condition, rejecting the adding contact command.

Optionally, the method further includes:
when receiving the adding contact command, obtaining the account identification of the target account corresponding to the adding contact command, and sending the adding contact request with account identification to the first terminal;
when receiving the allowed information sent from the first terminal, adding the target account as a contact; or when receiving the reject information sent from the first terminal, rejecting the adding contact command.

Optionally, the method further includes:
displaying other functions than the allowed functions of the target application;
when receiving an executing command of the second function in the other functions, sending the function executing request with the identification information of the second function to the first terminal;
when receiving the allowed information sent from the first terminal, executing the second function, or when receiving the reject information sent from the first terminal, rejecting the executing command.

Optionally, the method further includes:
when the predetermined trigger event happens, sending the local position information or movement route information to the first terminal.

In the embodiment of the disclosure, receiving allowed function list or the prohibited function list of the target application sent from the first terminal, determining the allowed functions in the target application according to the allowed function list or the prohibited function list, displaying the allowed functions under the kid mode of the target application, by the processing manner above, normal usage of the application is not affected under kid mode.

After consideration of the specification and practice of the disclosed disclosure, those skilled in the art may readily conceive other embodiments of the disclosure. This application is intended to cover any variations, uses or adaptations of the disclosure. These variations, uses or adaptations follow general principles of the disclosure, and include undisclosed common knowledge or customary technical means in this art. The specification and embodiments are considered exemplary only, and the true scope of the invention is indicated by the following claims.

It should be understood that, the invention is not limited to the above described exact structure illustrated in the accompanying drawings, and may have various modifications and changes without departing from the scope thereof. The scope of the invention is limited only by the appended claims.

## Claims

1. A method for processing a child mode, comprising:
a terminal device receiving an allowed function list or a prohibited function list of a target application sent from a first terminal;
the terminal device determining allowed functions in the target application according to the allowed function list or the prohibited function list; and
the terminal device displaying the allowed functions under a child mode of the target application.

2. The method according to claim 1, **characterized in that** the method further comprises:
the terminal device detecting when to-be-displayed content in the target application includes a predetermined first character, and when the terminal device detects to-be-displayed content includes a predetermined first character shielding the first character in the to-be-displayed content.

3. The method according to claim 1, **characterized in that** the method further comprises:
the terminal device detecting when to-be-displayed content in the target application includes a predetermined first character, and when the terminal detector to-be-displayed content includes a predetermined first character sending the to-be-displayed content to the first terminal.

4. The method according to claim 1, **characterized in that** the method further comprises:
the terminal device detecting that an operation executed by the target application meets a predetermined reporting condition, and when the terminal device detects an operation executed by the target application meets a predetermined reporting condition sending the operation's content to the first terminal.

5. The method according to claim 4, **characterized in that** the step of the terminal device detecting that the operation executed by the target application meets the predetermined reporting condition comprises:
detecting that the target application executes a predetermined first function, and when the terminal device detects that the target application executes a predetermined first function sending an executing content of the first function to the first terminal.

6. The method according to any preceding claim, **characterized in that** the method further comprises:
the terminal device receiving an allowed communication account list or a prohibited communication account list sent from the first terminal;
determining allowed communication accounts according to the allowed communication account list or the prohibited communication account list; and
prohibiting communications between a local account and accounts other than the allowed communication accounts.

7. The method according to any preceding claim, **characterized in that** the method further comprises:
the terminal device receiving an adding contact command, obtaining attribute information of a target account corresponding to the adding contact command; and
if the attribute information of the target account meets a predetermined adding condition, the terminal device adding the target account as a contact; if the attribute information of the target account does not meet the predetermined adding condition, the terminal device rejecting the adding contact command.

8. The method according to any preceding claim, **characterized in that** the method further comprises:
the terminal device receiving an adding contact command, obtaining an account identification of a target account corresponding to the adding contact command, and sending an adding contact request with the account identification to the first terminal; and
when receiving allowed information sent from the first terminal, the terminal device adding the target account as a contact; or, when receiving reject information sent from the first terminal, the terminal device rejecting the adding contact command.

9. The method according to any preceding claim, **characterized in that** the method further comprises:
the terminal device displaying other functions than the allowed functions of the target application;
the terminal device receiving an executing command of a second function in the other functions, sending a function executing request with identification information of the second function to the first terminal; and
receiving allowed information sent from the first terminal, executing the second function; or, when receiving reject information sent from the first terminal, rejecting the executing command.

10. The method according to any preceding claim, **characterized in that** the method further comprises:
when a predetermined trigger event happens, the terminal device sending local position information or movement route information to the first terminal.

11. A device for processing a child mode, comprising:
a receiving module configured to receive an allowed function list or a prohibited function list of a target application sent from a first terminal;
a determining module configured to determine allowed functions in the target application according to the allowed function list or the prohibited function list; and
a display module configured to display the allowed functions under a child mode of the target application.

12. The device according to claim 11, **characterized in that** the display module is further configured to:
detect that to-be-displayed content in the target application includes a predetermined first character, and having detected that to-be-displayed content in the target application includes a predetermined first character to shield the first character in the to-be-displayed content.

13. The device according to claim 11, **characterized in that** the device further comprises a sending module configured to:
detect that to-be-displayed content in the target application includes a predetermined first character, and having detected that to-be-displayed content in the target application includes a predetermined first character to send the to-be-displayed content to the first terminal.

14. The device according to claim 11, **characterized in that** the device further comprises a sending module configured to:
detect that an operation executed by the target application meets a predetermined reporting condition, and having detected that an operation executed by the target application meets a predetermined reporting condition to send the operation's content to the first terminal.

15. A computer program which, when being executed on a processor of a device, performs a method according to any of claims 1 to 10.
